# EUROPÄISCHE PATENTSCHRIFT

(11) **EP 3 298 212 B1**
(45) Veröffentlichungstag und Bekanntmachung des Hinweises auf die Patenterteilung: **10.07.2019**
(21) Anmeldenummer: 16705721.5
(22) Anmeldetag: 13.01.2016
(51) Int. Cl.: E04F 15/02, F16B 5/00

(54) **BELAG VON IM VERBUND VERLEGTEN RECHTECKIGEN ODER QUADRATISCHEN PANEELEN**
COVERING OF RECTANGULAR OR SQUARE PANELS LAID TO FORM AN ASSEMBLY
GARNITURE DE PANNEAUX RECTANGULAIRES OU CARRÉS JOINTS LES UNS AUX AUTRES

(30) Priorität: 27.03.2015 DE 202015101572 U
(43) Veröffentlichungstag der Anmeldung: 28.03.2018
(73) Patentinhaber: Schulte, Guido, 59602 Rüthen-Meiste (DE)
(72) Erfinder: Schulte, Guido, 59602 Rüthen-Meiste (DE)
(74) Vertreter: Griepenstroh, Jörg
(86) Internationale Anmeldenummer: PCT/DE2016/100015
(87) Internationale Veröffentlichungsnummer: WO 2016/155696

(56) Entgegenhaltungen:
- EP-A1- 1 415 056
- EP-A1- 1 650 375
- WO-A1-2005/090707
- WO-A1-2011/127981
- WO-A1-2013/023639
- DE-A1-102012 105 793

## Beschreibung

Die Verbindung betrifft einen Belag von im Verbund verlegten rechteckigen oder quadratischen Paneelen gemäß den Merkmalen im Anspruch 1.

Wand-, Decken- und Bodenbeläge, wie zum Beispiel Fertigparkett, Echtholzböden oder Laminatfußböden, bestehen aus mehreren Reihen von in ihrer Konfiguration vorwiegend rechteckigen Paneelen. Konventionell besitzen die Paneele auf einer Längsseite und auf einer Kopfseite durchgehende Nuten und auf der jeweils gegenüberliegenden Längsseite bzw. Kopfseite durchgehende Federn, die an die Nuten formschlüssig angepasst sind. Durch die Verbindung von Nut und Feder werden die Paneele verlegt. Je nach Verlegemuster sind auch schachbrettartige Verlegungen möglich, bei denen sich die Stoßfugen zwischen den Paneelen kreuzen. Unter schachbrettartig wird dabei auch eine Verlegung verstanden, bei denen im Wesentlichen rechteckige Paneele in fluchtenden Reihen und Spalten verlegt sind, so dass sich die Stoßfugen zwischen den Paneelen kreuzen und nicht nur T-förmig aufeinander stoßen.

Es ist bekannt, an den Nuten und Federn mechanische Verbindungsmittel auszubilden, welche bei in einem Fußbodenbelag benachbarten Paneelen miteinander in rastenden Eingriff gelangen. Hierdurch soll eine Fugenbildung bedingt durch Dehnungs- oder Schrumpfungsvorgänge vermieden werden. An Nut oder Feder der Paneele sind aneinander angepasste Verriegelungselemente in Form von Vertiefungen, Ausnehmungen oder Vorsprüngen ausgebildet, um die Paneele in der zusammengefügten Lage leimlos zu halten. In der Regel werden die Paneele entlang ihrer Längsseiten ineinander gedreht oder geklickt und anschließend seitlich verschoben, so dass Verriegelungsleisten an den Kopfseiten in Eingriff gelangen. Die Paneele werden versetzt zueinander angeordnet.

Schachbrettartig angeordnete Paneele mit sich kreuzenden Stoßfugen erlauben andere Verlegemuster. Insbesondere kann ein quadratisches Paneel gegenüber einem benachbarten Paneel um 90° gedreht verlegt werden, um ein abwechslungsreicheres Verlegemuster zu erzeugen. Bei Paneelen für Bodenbeläge sind üblicherweise Nut- und Feder an den Längsseiten anders konfiguriert als an den Querseiten, so dass die Paneele nur über ihre Längsseiten bzw. nur über die Querseiten miteinander verbunden werden können. Ein Drehen um 90°, um eine Querseite mit einer Längsseite zu verbinden, ist möglich.

EP 1 650 375 A1 offenbart einen Belag von im Verbund verlegten rechteckigen oder quadratischen Paneelen, wobei jedes Paneel an seinen Randseiten Nuten und Federn zur Horizontalverriegelung und Vertikalverriegelung mit benachbarten Paneelen besitzt und wobei die Federn zur Vertikalverriegelung an zwei benachbarten Randseiten angeordnet sind und die Nuten zur Vertikalverriegelung an den beiden anderen benachbarten Randseiten angeordnet sind, wobei eine der beiden Federn feststehend und die andere Feder beweglich ist, wobei das zuerst zu verlegende erste Paneel das anschließend zu verlegende, zweite Paneel zur Horizontalverriegelung untergreift und wobei zur Vertikalverriegelung an dem ersten Paneel eine Verriegelungskante und an dem zweiten Paneel die bewegliche Feder in einer Haltenut angeordnet ist, die hinter die Verriegelungskante verlagerbar ist, und wobei jede der beiden Federn in jede der Nuten zur Vertikalverrieglung eines solchen Paneels passt; wobei die bewegliche Feder beim vertikalen Ablegen von dem benachbarten Paneel elastisch verformbar ist.

Hiervon ausgehend liegt der Erfindung die Aufgabe zugrunde, einen Belag aus Paneelen aufzuzeigen, wobei die Paneele Längs- und Querseiten besitzen und über Verriegelungsmechanismen verfügen, die es gestatten, Längsseiten eines Paneels mit Querseiten eines anderen Paneels zu verbinden.

Diese Aufgabe ist bei einem Belag mit den Merkmalen des Anspruchs 1 gelöst. Vorteilhafte Weiterbildungen der Erfindung sind Gegenstand der Unteransprüche. Der erfindungsgemäße Belag sieht einen Verbund aus rechteckigen oder quadratischen Paneelen vor, wobei die Paneele schachbrettartig angeordnet sind. Schachbrettartig bedeutet, dass sich die Stoßfugen zwischen den Paneelen durchkreuzen. Es stoßen immer vier Ecken benachbarter Paneele zusammen. Die einzelnen Paneele sind in fluchtenden Reihen und Spalten angeordnet. Erfindungsgemäß ist vorgesehen, dass jedes Paneel an seinen Randseiten Nuten und Federn zur Horizontalverriegelung und Vertikalverriegelung mit benachbarten Paneelen besitzt, wobei die Federn zur Vertikalverriegelung an zwei benachbarten Randseiten angeordnet sind und die Nuten zur Vertikalverriegelung an den beiden anderen benachbarten Randseiten angeordnet sind. Eine der beiden Federn ist feststehend. Die andere Feder ist beweglich. Das zuerst zu verlegende Paneel ist so konfiguriert, dass es das anschließend zu verlegende, zweite Paneel zur Horizontalverriegelung untergreift. Zur Vertikalverriegelung ist an dem ersten Paneel eine Verriegelungskante und an dem zweiten Paneel die bewegliche Feder angeordnet. Die bewegliche Feder ist hinter die Verriegelungskante verlagerbar. Jede der beiden Federn passt in jede Nut zur Vertikalverriegelung eines solchen Paneels.

Dadurch, dass die beiden Federn in jede der beiden Nuten passen, ist es möglich, das Paneel um 90° gedreht mit dem benachbarten Paneel zu verbinden. Daher sind verschiedene Verlegemuster mit dem erfindungsgemäßen Paneel möglich. Ferner ermöglicht es das Paneel durch die Kombination einer feststehenden Feder und einer beweglichen Feder, die Paneele besonders einfach miteinander zu verbinden.

Eine bevorzugte Verlegeart ist Gegenstand des Anspruchs 2. Hierbei ist vorgesehen, dass die beweglichen Federn von vier im Quadrat angeordneten Paneelen in vier unterschiedliche Richtungen weisen, wobei die beweglichen Federn von sich diagonal gegenüberliegenden Paneelen in entgegengesetzte Richtungen weisen. Dieses Verlegeprinzip kann beliebig fortgesetzt werden, so dass sich ein wiederholendes Muster ausbildet. Benachbarte Paneele sind dabei jeweils immer um 90° zueinander versetzt angeordnet.

Die Paneele können an den Randseiten, an denen die Feder beweglich ist, durch horizontales Ineinanderstecken, durch vertikales Ablegen oder durch Einschwenken miteinander verbindbar sein bzw. verbunden werden.

Die bewegliche Feder ist an einer Haltenut angeordnet. Zum Verbinden mit einem benachbarten Paneel ist sie bevorzugt durch elastische Verformung während des Kontaktes mit dem benachbarten Paneel in eine Freigabeposition verlagerbar. Bei Erreichen der Verriegelungsposition fährt die elastisch verformte Feder wieder aus der Haltenut aus, um zur Vertikalverriegelung die Verriegelungskante am anderen Paneel zu hintergreifen. Die bewegliche Feder wird zum Verriegeln daher in zwei Richtungen bewegt. Zunächst muss die Feder zurückgedrängt werden, um anschließend entgegen der Federkraft, die in diesem Fall aus der Materialeigenspannung resultiert, wieder in die Verriegelungsposition zu gelangen.

Die Haltenut verläuft schräg zur Oberseite des Paneels. Die Feder ist immer bestrebt, aus der Haltenut herauszutreten. Die Orientierung der Haltenut unterstützt diese Bewegung zusätzlich durch die Schwerkraft der Feder.

An dem Paneel, welches das benachbarte Paneel zur Horizontalverriegelung mit einer Rastzunge untergreift, ist ein Auflagersockel im vertikalen Abstand zur Rastzunge angeordnet. Der Auflagersockel dient zur Ausrichtung der beiden Paneele in der Höhe, d. h. zur vertikalen Ausrichtung. Der Auflagersockel bzw. seine Oberseite befindet sich vorzugsweise näher zur Oberseite des ersten Paneels als zur Unterseite des Paneels. Auf diese Weise kann eine von dem zweiten Paneel ausgehende Druckkraft nahe der Oberseite in das erste Paneel eingeleitet werden. Die Paneele bleiben exakt in der Höhe ausgerichtet.

Der Auflagersockel hat die Funktion, beim Verriegeln mit der beweglichen Feder des benachbarten Paneels in Kontakt zu kommen und diese während des Kontaktes elastisch zu verformen.

Damit die elastische Feder nicht an dem Auflagersockel klemmt, kann ein längsseitig aus der Haltenut vorstehender Teil der beweglichen Feder an seiner Unterseite eine gegenüber der Verlegeebene und gegenüber der Senkrechten zur Verlegeebene geneigte Gleitfläche besitzen. Die Gleitfläche bewirkt durch ihre Neigung, dass die Feder beim Kontakt mit dem Auflagersockel an dem Auflagersockel abgleitet. Diese Bewegung wird durch die Neigung und die Kontur der Gleitfläche bestimmt. Die Gleitfläche kann konkav oder konvex gekrümmt sein, je nachdem welche Relativbewegung und welche Bewegungsgeschwindigkeit gewünscht ist.

Die bewegliche Feder ist in der Haltenut vorzugsweise verliersicher gehalten. Die Verliersicherung kann form-, stoff- und/oder kraftschlüssig sein. Eine kraftschlüssige Verbindung ist eine Klemmverbindung im Weitesten Sinne. Hierzu kann die Feder einen feststehenden und einen beweglichen Teil besitzen, wobei der feststehende Teil mit dem beweglichen Teil verbunden ist. Der bewegliche Teil, d. h. der Verriegelungsteil, kann aus der Haltenut ein- und ausfahren. Der feststehende Teil ist in der Haltenut klemmgehaltert. Hierzu können in Richtung der Nutwangen der Haltenut gerichtete Vorsprünge an der Feder angeordnet sein. Die Feder kann alternativ oder zusätzlich stoffschlüssig gehalten sein, beispielsweise durch einen Klebstoff, der zwischen der Feder und der Haltenut wirkt. Schließlich ist auch eine formschlüssige Verbindung möglich. Es können geeignete Vorsprünge und Vertiefungen nach dem Vater-Mutter-Prinzip an der beweglichen Feder bzw. der Haltenut oder an zur Haltenut benachbarten Bereichen ausgebildet sein, um die bewegliche Feder verliersicher in der Ausgangsposition zu halten.

Bevorzugt besitzt die bewegliche Feder wenigstens einen Haltenocken, der in der Verriegelungsstellung außerhalb der Haltenut angeordnet ist und die bewegliche Feder in der Verriegelungsstellung hält und/oder die bewegliche Feder in der Freigabestellung formschlüssig oder kraftschlüssig in der Haltenut hält.

Ein solcher Haltenocken erfüllt in diesem Fall zwei Funktionen: In der Ausgangsposition befindet sich die bewegliche Feder in der Haltenut. In dieser Freigabestellung soll der Haltenocken die Feder zurückhalten, so dass sie zum Verriegeln nicht zweimal hin und her bewegt werden muss. Beim Ablegen des zweiten Paneels kann die Feder mit dem Haltenocken leicht bewegt werden, so dass der Haltenocken aus der dafür vorgesehenen Rastvertiefung in der Haltenut herausbewegt wird. Beim weiteren Verlagern kann die bewegliche Feder nun von der Freigabestellung in die Verriegelungsstellung ausgefahren werden. Gleichzeitig fährt auch der Haltenocken aus der Haltenut aus. Er liegt nun außerhalb einer Mündung der Haltenut, so dass die bewegliche Feder selbsttätig nicht mehr in die Haltenut zurückgelangen kann. Dies wird durch den formschlüssigen Eingriff des Haltenockens an der Mündung der Haltenut verhindert.

In einer weiteren Ausführungsform ist der Haltenocken an einer Zunge angeordnet, die dafür vorgesehen ist, beim vertikalen Ablegen oder Abschwenken des zweiten zu verlegenden Paneels mit dem Auflagersockel des zuerst verlegten, anderen Paneels in Kontakt zu kommen. Diese Zunge ist beispielsweise an einer Unterseite der beweglichen Feder ausgebildet. Die bewegliche Feder weist zur Unterseite der Paneele. Oberhalb der Zunge befindet sich an der beweglichen Feder ein Freischnitt. Dies ermöglicht die Bewegung der Zunge in Vertikalrichtung, d. h. relativ zu den übrigen Teilen der beweglichen Feder. Dementsprechend ist der Haltenocken an der Zunge nach unten gerichtet und kann in eine Rastvertiefung an einer unterseitigen Nutwange der Haltenut in Eingriff gelangen.

Der Erfindungsgedanke ist für alle Boden-, Wand- und Deckensysteme anwendbar, insbesondere bei denen ein Oberbelag auf einem Träger, bei welchem es sich insbesondere um eine Holzwerkstoffplatte, wie z. B. eine MDF-, HDF- oder Spanplatte handelt, angeordnet ist, wie beispielsweise Echtholzbeläge, Laminat, Träger mit lackierten Oberflächen als Oberbelag, Linoleum, Kork auf Trägerplatten etc. Die Deckschicht kann insbesondere aus einem Dekorpapier mit Overlay bestehen, welches die Optik der Elemente bestimmt. Bei einem Fußbodenbelag kann es sich somit um einen Fertigparkettboden, einen Echtholzboden oder um einen Laminatfußboden handeln. Ebenso eignen sich Paneele aus massivem Material wie z. B. Holzdielen, Holzelemente, gegossene oder gespritzte Formplatten aus Kunststoff, insbesondere PVC aus Formteilen oder Gipsplatten. Die Federn können auch bei Paneelen mit geringerer Dicke von 4 mm bis 8 mm verwendet werden. Die Paneele können unter anderem Paneele für PVC-Böden sein, z. B. Trägerplatten mit oberseitigen Belägen auf PVC-Basis. Paneele können allgemein Kunststoffplatten oder auch Platten auf Zementbasis sein, d. h. Platten auf Basis von mineralischen Werkstoffen. Die einzelnen Paneele können durch Fasern verstärkt sein.

Der erfindungsgemäße Belag ermöglicht bei entsprechenden Verriegelungsnuten und Klick-Verbindungen, die sowohl durch Einschwenken (fold down) als auch durch senkrechtes Ablegen von oben hergestellt werden können. Gleichzeitig ist es möglich, die Verbindung durch horizontales Ineinanderschieben innerhalb der Verlegeebene bzw. Einschlagen innerhalb der Verlegeebene herzustellen. Der erfindungsgemäße Belag eignet sich für rechteckige und quadratische Paneele mit sich kreuzenden Fugen. Es ergibt sich eine wesentlich größere gestalterische Vielfalt bei dieser Art der Klick-Paneele. Die Paneele können im Bereich ihrer Randseiten oberseitig sichtbar mit einem Stufenfalz versehen sein, um eine deutlich sichtbare Stoßfuge auszubilden. Es kann sich bei dem Stufenfalz um eine Abstufung an nur einer Randseite oder an beiden Randseiten handeln. Eine oder beide Randseiten können auch mit einer Fase versehen sein. Der Winkel der Fase beträgt bevorzugt 30° bis 45°.

Die Federn können für Paneele mit Dicken von 4 mm bis 20 mm eingesetzt werden.

Die Erfindung wird nachfolgend anhand von in den Zeichnungen schematisch dargestellten Ausführungsbeispielen nicht erläutert. Es zeigen:
- Figur 1: einen Vertikalschnitt durch den Randbereich zweier miteinander in Eingriff stehender Paneele eines Belags;
- Figur 2: einen Vertikalschnitt durch den Randbereich zweier miteinander in Eingriff stehender Paneele an einer anderen Randseite;
- Figur 3: eine Verlegeanordnung der Paneele der Figuren 1 und 2;
- Figur 4: eine Ausführungsform einer verlagerbaren Feder in der Draufsicht;
- Figur 5: die Feder der Figur 4 in der Einbaulage in einem Paneel;
- Figur 6: das Paneel der Figur 5 im Eingriff mit dem Randbereich eines anderen Paneels;
- Figur 7: die Paneele der Figur 6 in der Verriegelungsposition;
- Figur 8: eine weitere Ausführungsform einer Feder in einer Seitenansicht;
- Figur 9: die Feder der Figur 8 in der Draufsicht;
- Figur 10: einen vergrößerten Ausschnitt der Figur 9;
- Figur 11: einen Schnitt entlang der Linie XI-XI in Figur 10;
- Figur 12: einen Schnitt entlang der Linie XII-XII in Figur 10;
- Figur 13: die Feder der Figuren 8 und 9 in einer perspektivischen Darstellung;
- Figur 14: die Feder der Figur 13 in der Einbaulage in der Freigabeposition;
- Figur 15: die Feder der Figur 13 während des Verriegelungsvorgangs mit einem benachbarten Paneel;
- Figur 16: die Paneele der Figur 15 im Verriegelungszustand und
- Figur 17: eine weitere Darstellung eines Verlegemusters.

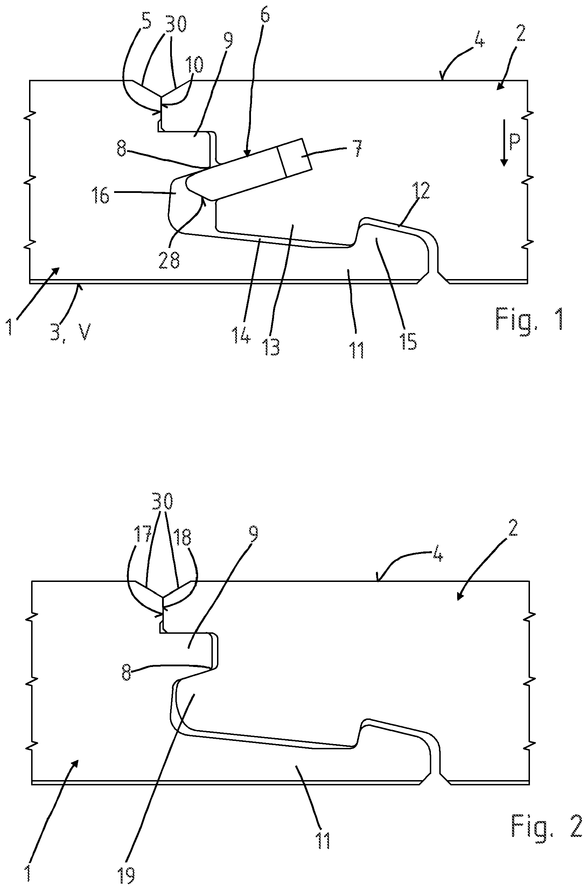

Figur 1 zeigt einen Querschnitt durch den Verbindungsbereich zweier Paneele 1, 2. Die Paneele 1, 2 sind so konfiguriert, dass sie zu einem Belag, insbesondere einem Fußbodenbelag, zusammengesetzt werden können. Die Paneele 1, 2 besitzen eine dem Paneeluntergrund zugewandte Unterseite 3 sowie eine Oberseite 4, die der Sichtseite entspricht. Die Unterseite 3 und die Oberseite 4 verlaufen parallel zu einer Verlegeebene V. Das zweite Paneel 2 weist an der zum ersten Paneel 1 weisenden Seite 5 und Feder 6 in einer Haltenut 7 auf. Die Feder 6 ist dafür vorgesehen, hinter eine Verriegelungskante 8 an dem ersten Paneel 1 zu fassen. Die Verriegelungskante 8 befindet sich unterhalb einer Auflagerleiste 9, die als Vorsprung an der Seite 10 des ersten Paneels 1 ausgebildet ist. Die Auflagerleiste 9 verläuft bei diesem Ausführungsbeispiel oberseitig parallel zur Verlegeebene V. An der Randseite 5 des zweiten Paneels 2 ist ein entsprechender Rücksprung ausgebildet, sodass das zweite Paneel 2 nahe seiner Oberseite 4 senkrecht zur Verlegeebene V an dem ersten Paneel 1 abgestützt ist.

Das erste Paneel 1 weist eine Verriegelungsleiste 11 auf. Die Verriegelungsleiste 11 des ersten Paneels 1 steht gegenüber der Seite 10 des ersten Paneels 1 am weitesten vor. Das zweite Paneel 2 besitzt einen nach unten offenen Kuppelkanal 12 und einen sich hieran anschließenden, nach unten gerichteten Kuppelwulst 13. Das zweite Paneel 2 wird so gegenüber dem ersten Paneel 1 angeordnet, dass beim Absenken in Richtung des Pfeils P der Kuppelwulst 13 des zweiten Paneels 2 mit einem nach oben offenen Kuppelkanal 14 der Verriegelungsleiste 11 und der Kuppelkanal 12 des zweiten Paneels 2 mit einem Kuppelwulst 15 der Verriegelungsleiste 11 in Eingriff gelangt. Dieser Bereich der Paneele 1, 2 dient zur horizontalen Verbindung der Paneele 1, 2.

Das Ablegen in Richtung des Pfeils P kann dadurch erfolgen, dass die Oberseite 4 des zweiten Paneels 2 parallel zur Verlegeebene V verlagert wird. Das zweite Paneel 2 kann alternativ durch Verschwenken um eine andere Randseite gegenüber dem ersten Paneel 1 abgewinkelt werden.

Der Kuppelwulst 15 an der Verriegelungsleiste 11 des ersten Paneels 1 sowie der nach unten vorstehende Kuppelwulst 13 an dem zweiten Paneel 2 besitzen jeweils eine schräggestellte Oberseite bzw. Unterseite, so dass auch beim Zusammenschieben der Paneele 1, 2 in Richtung der Verlegeebene V, d. h. beim horizontalen Zusammenschieben, der Kuppelwulst 13 des zweiten Paneels 2 auf dem Kuppelwulst 15 des zuerst verlegten ersten Paneels 1 abgleitet. Dabei wird das zweite Paneel 2 angehoben, bis die beiden Paneele 1, 2 über den höchsten Punkt des Kuppelwulstes 15 der Verriegelungsleiste geführt sind. Dann rutscht das zweite Paneel 2 selbsttätig in den nach oben offenen Kuppelkanal 14 an der Verriegelungsleiste und nimmt die in Figur 1 dargestellte Position ein. Die Paneele 1, 2 können daher nicht nur durch senkrechtes Ablegen oder Einwinkeln miteinander verbunden werden, sondern auch durch horizontales Ineinanderschieben in Richtung der Verlegeebene V. Auch kann das erste Paneel 1 unter das zweite Paneel 2 geschoben werden.

Wesentlicher Bestandteil der Verbindung zwischen den beiden Paneelen 1, 2 ist die Feder 6 sowie das Zusammenspiel der Profilierungen im Bereich der Randseiten 5, 10 der Paneele 1, 2. Die Feder 6 besteht aus Kunststoff. Sie ist elastisch verformbar. Sie ist in die Haltenut 7 hinein verlagerbar und aus der Haltenut 7 teilweise heraus verlagerbar, so dass sie hinter die Verriegelungskante 8 fasst. Das in der Bildebene linke Paneel 1 besitzt unterhalb der Verriegelungskante 8 eine Verriegelungsnut 16. Die Verriegelungsnut 16 mit der darüber liegenden Konsole 9 und der darunter angeordneten Verriegelungsleiste 11 ist in gleicher Weise an dem in der Bildebene rechten Paneel 2 ausgebildet. In gleicher Weise ist die Randseite 5 mit der verlagerbaren Zunge 6 an dem in der Bildebene linken Paneel 1 ausgebildet. Im Bereich der Randseiten 5, 10 sind Fasen 30 im Übergang zur Oberseite 4 der Paneele 1, 2 angeordnet. Alternativ kann eine Abstufung durch einen Stufenfalz gebildet sein, der an einer oder beiden Randseiten 5, 10 angeordnet sein kann. Die beiden Paneele 1, 2 sind identisch konfiguriert. Die Paneele 1, 2 sind quadratisch.

Figur 2 zeigt die beiden anderen Randseiten der Paneele 1, 2. In diesem Fall sind die Paneele 1, 2 über ihre Randseiten 17, 18 miteinander verbunden. Das erste Paneel 1 besitzt wiederum eine Verriegelungsleiste 11 mit der darüber angeordneten Verriegelungsnut 16 und der darauf folgenden Auflagerleiste 9. Die Randseite 18 des ersten Paneels ist daher genauso konfiguriert wie die Randseite 10. Das in der Bildebene rechte, zweite Paneel 2 besitzt an seiner Randseite 17 allerdings keine bewegliche Feder, sondern eine feststehende Feder 19, die hinter die Verriegelungskante 8 und damit in die Verriegelungsnut 16 fasst. An den Randseiten 17, 18 sind wiederum Fasen 30 ausgebildet.

Jedes Paneel 1, 2 besitzt damit eine Randseite 5 mit einer beweglichen Feder 6, eine weitere Randseite 17 mit einer feststehenden Randfeder 19 und zwei weitere Randseiten 10, 18, die identisch konfiguriert sind und eine Verriegelungsnut 16 besitzen.

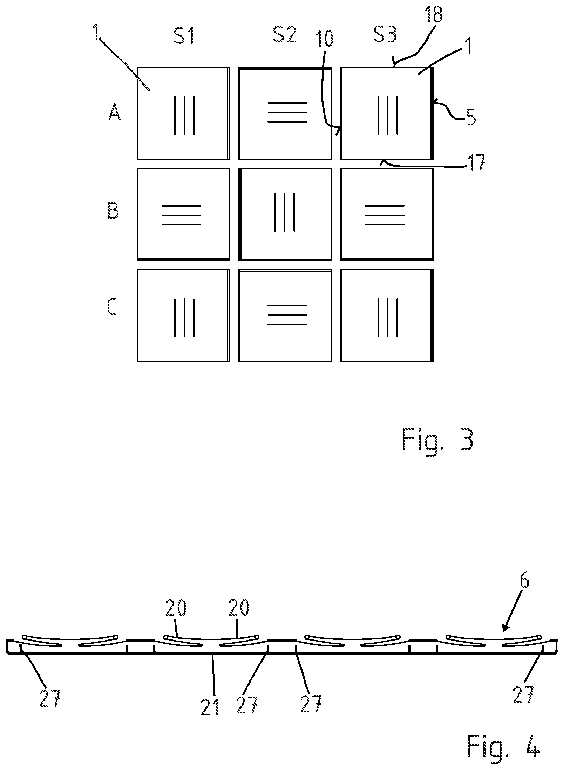

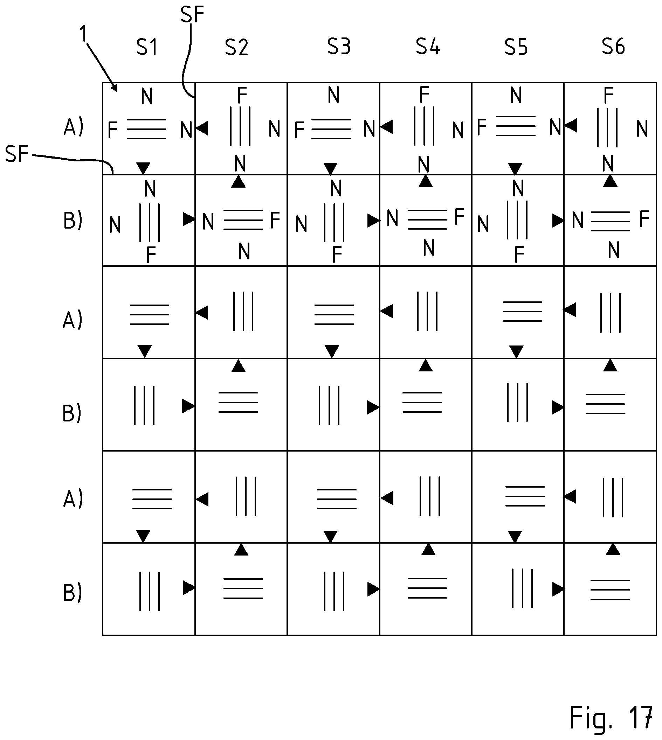

Die so konfigurierten Paneele 1, 2 können zu einem schachbrettartigen Verbund verlegt werden, wie er in den Figuren 3 und 17 dargestellt ist. Figur 3 zeigt neun identisch konfigurierte Paneele 1, die schachbrettartig angeordnet sind und daher in fluchtenden Reihen A, B, C und Spalten S1, S2, S3 angeordnet. Alle Paneele 1 sind identisch konfiguriert, allerdings unterschiedlich orientiert. Benachbarte Paneele 1 sind jeweils um 90° zueinander versetzt angeordnet. Das Verlegemuster wiederholt sich. Die Spalte S1 ist identisch mit der Spalte S3. Die Reihe A ist identisch mit der Reihe C. Dementsprechend ist in der größeren Darstellung gemäß Figur 17 die vierte Reihe wieder mit A und die fünfte mit B bezeichnet.

In Figur 3 sind die Randseiten 5 mit der verlagerbaren Feder 6 als Doppellinie dargestellt. Es ist zu erkennen, dass die Randseiten 5 mit der beweglichen Feder 6 bei benachbarten Paneelen 1 immer in unterschiedliche Richtungen weisen. Alternativ ist es natürlich denkbar, dass die Verlegerichtung der elastischen Federn 6 immer gleich ist. Dadurch ergibt sich eine gleichmäßige Oberflächenstruktur. Beide Verlegearten sind mit dem erfindungsgemäßen Verfahren möglich.

Figur 17 verdeutlicht die Lage der einzelnen Randseiten. Mit dem dreieckigen Pfeil ist die Position der Randseite mit der beweglichen Feder 6 gekennzeichnet. F steht für die Randseite 17 (Figur 3) mit der feststehenden Feder 19 und die beiden anderen mit N gekennzeichneten Randseiten 10, 18 sind die identisch konfigurierten Randseiten 10, 18 mit Verriegelungsnuten 16 (Figuren 1 und 2). Die in Figur 17 in der Bildebene links oben dargestellten vier Paneele 1 zeigen nochmals sehr anschaulich das Verlegeschema. Die Paneele 1 sind fluchtend in Reihen A, B und Spalten S1, S2, S3, S4, S5, S6 angeordnet. Die Pfeile, welche die Randseiten mit der beweglichen Feder symbolisieren, zeigen unterschiedliche Richtungen. Dieses Vierer-Muster wiederholt sich in den beiden benachbarten Spalten S3, S4 bzw. den beiden benachbarten Reihen A, B, so dass sich ein Verlag aus dem Verbund verlegten rechteckigen oder quadratischen Platten ergibt, bei denen die Paneele 1 schachbrettartig angeordnet sind. Durch die fluchtenden Reihen A, B bzw. Spalten S1, S2, S3, S4 kreuzen sich die Stoßfugen SF exakt an den Ecken der einzelnen Paneele 1.

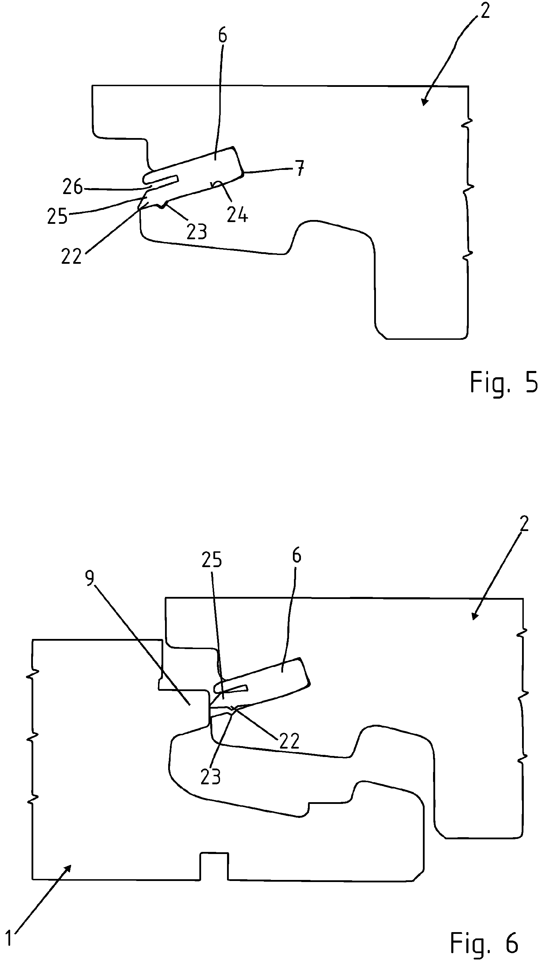

Figur 4 zeigt eine erste Ausführungsform einer Feder 6 in der Draufsicht. Nachfolgend werden für im Wesentlichen identische Bauteile, insbesondere Federn, gleichbleibende Bezugszeichen verwendet. Die Feder 6 aus Kunststoff besitzt mehrere federnde Arme 20, die sich in der Einbaulage am Nutgrund der Haltenut 7 befinden. Dort stützen sich die federnden Arme 20 ab. Die federnden Arme 20 weisen paarweise in entgegengesetzte Richtungen. Insgesamt sind acht federnde Arme 20 vorgesehen, die in der entspannten Stellung bogenförmig gekrümmt sind. Sie sind dafür vorgesehen, einen Verriegelungsteil 21 der Feder 6 aus der Haltenut 7 herauszudrücken. Der Verriegelungsteil 21 verbindet die einzelnen, paarweise angeordneten, federnden Arme 20 miteinander. Jeweils zwischen einem Paar federnder Arme 20 befinden sich zwei Einkerbungen, deren Funktionsweise anhand der Figur 5 deutlich wird.

Figur 5 zeigt die Feder 6 in der Einbaulage in einem Paneel 2. Die Feder 6 befindet sich tief in der Haltenut 7. Sie befindet sich in der Freigabestellung. Sie wird dort von einem Haltenocken 22 an einer Unterseite 7 der Feder 6 gehalten. Der Haltenocken 22 greift in eine Rastvertiefung 23 an einer unteren Nutwange 24 der Haltenut 7. Der Haltenocken 22 ist an einer Zunge 25 angeordnet, die sich unterhalb eines Freischnitts 26 befindet. Der Freischnitt 26 ist gewissermaßen eine stirnseitige Einkerbung in der Feder 6, so dass sich die Zunge 25 frei nach oben bewegen kann. Die freie Beweglichkeit der Zunge 25 wird zudem dadurch ermöglicht, dass senkrecht zum Freischnitt 26 die Einkerbungen 27 (Figur 4) in der Feder 6 vorgesehen sind. Figur 4 zeigt, dass es insgesamt drei Paare von Einkerbungen 27 gibt. In diesen Bereichen ist jeweils eine Zunge 25 angeordnet. Zusätzliche Einkerbungen 27 sind im Endbereich der Feder 6 angeordnet, so dass auch die Endbereiche der Feder 6 mit einer Zunge 25 versehen sind, wie sie in der Schnittdarstellung der Figur 5 dargestellt ist.

Figur 6 zeigt das Funktionsprinzip. Beim Ablegen des zweiten Paneels 2 gegenüber dem ersten Paneel 1 berührt die Zunge 25 den Auflagersockel 9 und wird gebogen, so dass der Haltenocken 22 aus der Rastvertiefung 23 nach oben gedrückt wird. Beim weiteren Absenken wird die Feder 6 über die Arme 20 (Figur 4) vom Nutgrund der Haltenut 7 weggedrückt, so dass die Feder 6 hinter die Verriegelungskante 8 und damit in die Verriegelungsnut 16 fasst. Gleichzeitig verhindert der Haltenocken 22, dass die Feder 6 zurück in die Haltenut 7 gedrückt wird.

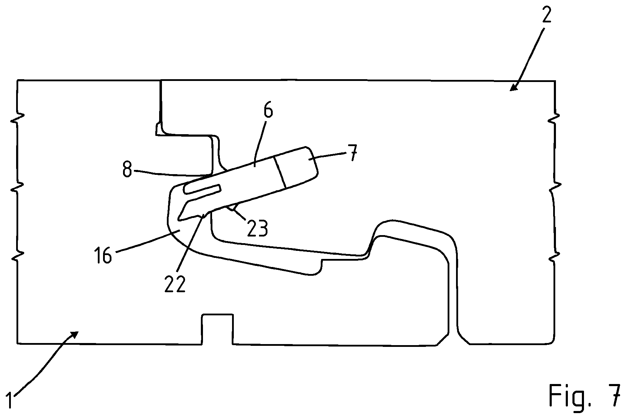

Abweichend vom Ausführungsbeispiel der Figur 1 besitzt die Feder 6 bei dem Ausführungsbeispiel der Figuren 4 bis 7 keine schräge Gleitfläche 28. Die Gleitfläche 28 (Figur 1) hat eine Neigung gegenüber der Verriegelungsebene V. Die Gleitfläche 28 ist dafür vorgesehen, eine Feder 6, die auch in der Ausgangsstellung aus der Haltenut 7 vorsteht, bei einem oberseitigen Kontakt mit dem Auflagersockel 9 in die Haltenut 7 zurückzudrücken. Wenn das zweite Paneel 2 vollständig abgelegt worden ist, schnappt die Feder 6 hinter die Verriegelungskante 8. Eine solche Gleitfläche 28 ist bei dem Ausführungsbeispiel der Figuren 4 bis 7 nicht erforderlich, da die Feder 6 in der Ausgangsposition nicht bzw. nur mit der vordersten Spitze der Zunge 25 aus der Haltenut 7 vorsteht. Sie muss nicht nach dem Prinzip der schiefen Ebene in die Haltenut 7 zurückgedrückt werden.

Die Feder 6 der Figur 1 führt beim Ablegen des Paneels 2 eine Hin- und Rückbewegung aus. Die Feder 6 der Figuren 4 bis 7 wird nur in eine Richtung bewegt und zwar aus der Haltenut 7 heraus.

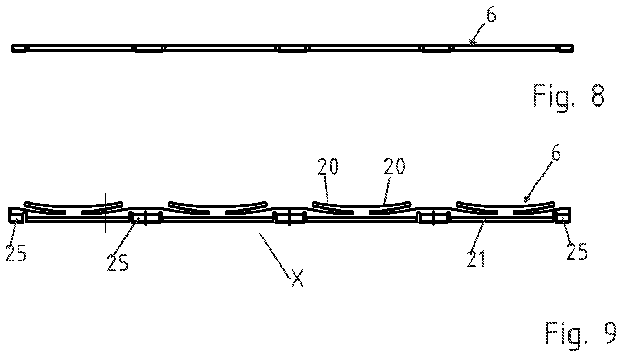

Die Figuren 8 und 9 zeigen eine weitere Bauform einer Feder 6 in einer Stirnansicht und einer Draufsicht. Die Feder 6 besitzt wiederum Arme 20, einen Verriegelungsteil 21 und insgesamt fünf Zungen 25. Zwei Zungen 25 befinden sich jeweils im Endbereich der Feder 6. Drei weitere Zungen 25 befinden sich in gleichmäßigem Abstand zueinander zwischen den endseitigen Zungen 25. Zwischen jeweils zwei Zungen 21 befindet sich eine Anordnung von zwei Armen 20, die wiederum in entgegengesetzte Richtung weisen. Die Feder 6 ist genau wie die anderen Federn ein flächiges Bauteil aus Kunststoff.

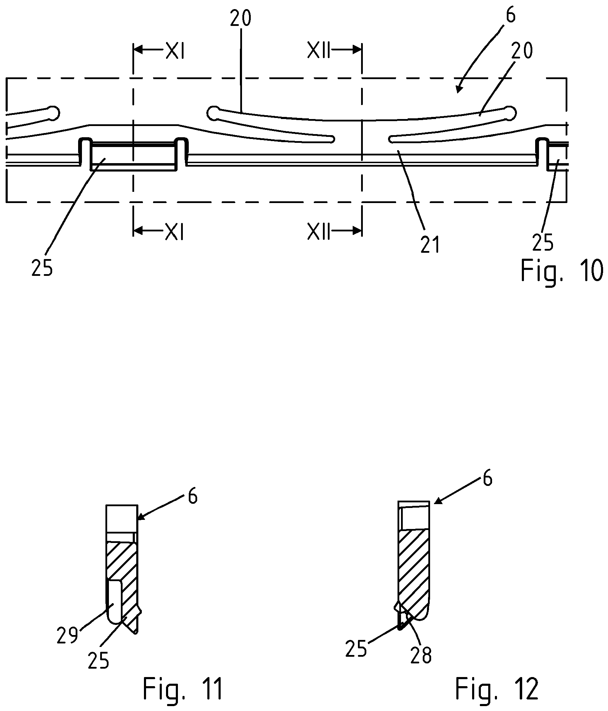

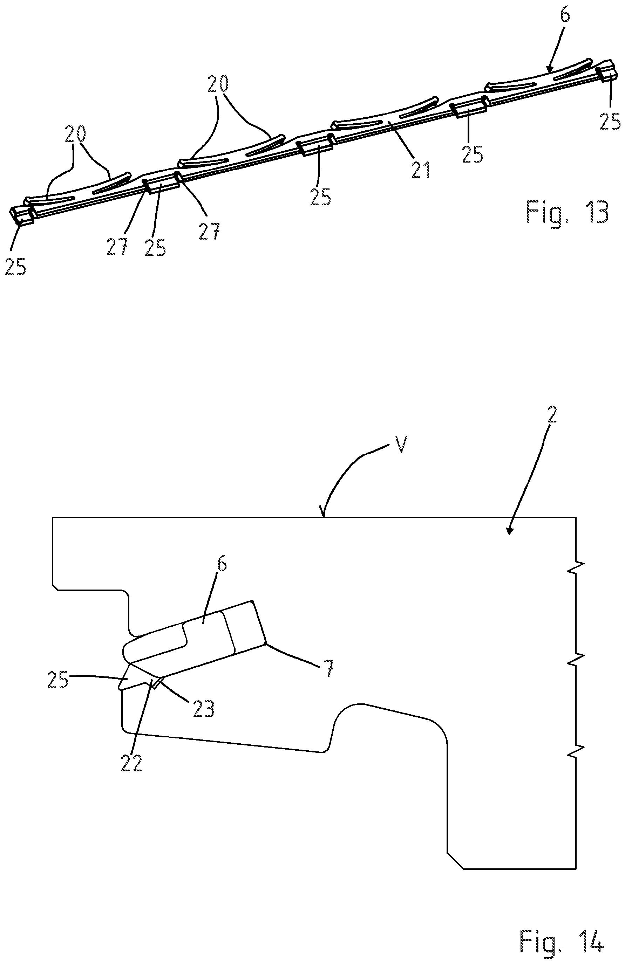

Figur 10 zeigt in einer Vergrößerung der Figur 9 die Lage zweier Schnittebenen XI-XI, XII-XII entsprechend der Figuren 11 und 12. Es ist anhand der Figur 11 zu erkennen, dass die Zunge 25 ähnlich gestaltet ist wie bei dem vorhergehenden Ausführungsbeispiel. Allerdings befindet sich oberhalb der Zunge 25 ein Freiraum 29, was diese Ausführungsform von derjenigen der Figuren 4 bis 7 unterscheidet. Ein Freischnitt 26, wie er in Figur 5 dargestellt ist, ist hier nicht vorhanden. Die Schnittdarstellung der Figur 12 zeigt darüber hinaus, dass in den übrigen Bereichen der Feder 6, d. h. in denjenigen Bereichen, in denen sich keine Zunge 25 befindet, die Feder mit einer Gleitfläche 28 versehen ist, genauso wie bei dem Ausführungsbeispiel der Figur 1. Dieses Ausführungsbeispiel kombiniert daher Merkmale des ersten Ausführungsbeispiels und des zweiten Ausführungsbeispiels. Figur 13 zeigt diese Ausführungsform einer Feder 6 in perspektivischer Darstellung. Erkennbar ist, dass die Zungen 25 auf ihrer dem Betrachter zugewandten Oberseite mit einer Aussparung 29 benachbart sind. Die Zungen werden durch Einkerbungen 27 begrenzt.

Die Figuren 14 bis 16 zeigen die Feder 6 in der Einbaulage. Die Feder 6 befindet sich in der Freigabeposition innerhalb der geneigt verlaufenden Haltenut 7. Bei allen Ausführungsbeispielen verläuft die Haltenut schräg von unten nach oben. Das heißt, die Mündung der Haltenut 7 liegt tiefer als das Innere bzw. Tiefste der Haltenut 7. Die Nutwangen der Haltenut 7 verlaufen parallel und geneigt zur Verlegeebene V.

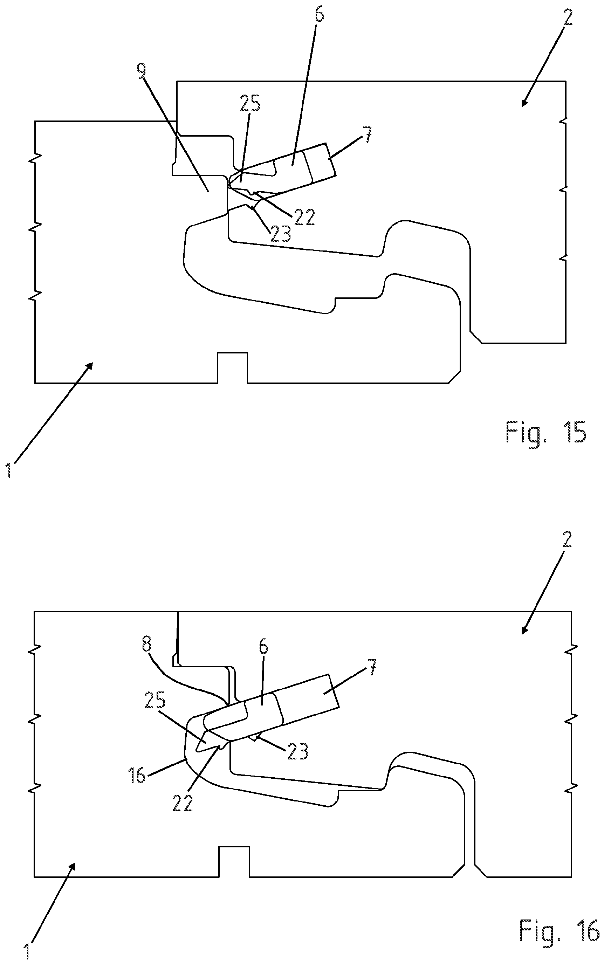

Figur 15 zeigt, wie das in der Bildebene rechte Paneel 2 mit dem bereits verlegten Paneel 1 in Eingriff gelangt. Die Zunge 25 wird durch den Kontakt mit dem Auflagersockel 9 nach oben gedrückt, so dass der Haltenocken 22 aus der Rastvertiefung 23 angehoben wird. Schließlich wird die Feder 6 durch die Federkraft der nicht näher dargestellten Arme aus der Haltenut 7 in Richtung zur Verriegelungsnut 16 verlagert, so dass sie hinter die Verriegelungskante 8 des ersten Paneels 1 fasst. Der Haltenocken 22 verhindert ein Zurückgleiten der Feder 6 in die Haltenut 7. Die Feder 6 ist durch die Federkraft der Arme und in der Offenstellung gehalten.

### Bezugszeichen:

- 1 -: Paneel
- 2 -: Paneel
- 3 -: Unterseite
- 4 -: Oberseite
- 5 -: Randseite
- 6 -: Feder
- 7 -: Haltenut
- 8 -: Verriegelungskante
- 9 -: Auflagersockel
- 10 -: Randseite
- 11 -: Verriegelungsleiste
- 12 -: Kuppelkanal
- 13 -: Kuppelwulst
- 14 -: Kuppelkanal
- 15 -: Kuppelwulst
- 16 -: Verriegelungsnut
- 17 -: Randseite
- 18 -: Randseite
- 19 -: Feder
- 20 -: Arm
- 21 -: Verriegelungsteil
- 22 -: Haltenocken
- 23 -: Rastvertiefung
- 24 -: Nutwange
- 25 -: Zunge
- 26 -: Freischnitt
- 27 -: Einkerbung
- 28 -: Gleitfläche
- 29 -: Freiraum
- 30 -: Fase

- A -: Reihe
- B -: Reihe
- C -: Reihe
- F -: Federseite
- N -: Nutseite
- P -: Pfeil
- S1 -: Spalte
- S2 -: Spalte
- S3 -: Spalte
- S4 -: Spalte
- S5 -: Spalte
- S6 -: Spalte
- SF -: Stoßfuge

## Patentansprüche

1. Belag von im Verbund verlegten rechteckigen oder quadratischen Paneelen (1, 2), wobei die Paneele (1, 2) schachbrettartig angeordnet sind, so dass sich Stoßfugen (SF) zwischen den Paneelen (1, 2) kreuzen, wobei jedes Paneel (1, 2) an seinen Randseiten (5, 10, 17, 18) Nuten (16) und Federn (19) zur Horizontalverriegelung und Vertikalverriegelung mit benachbarten Paneelen (1, 2) besitzt und wobei die Federn (6, 19) zur Vertikalverriegelung an zwei benachbarten Randseiten (5, 17) angeordnet sind und die Nuten (16) zur Vertikalverriegelung an den beiden anderen benachbarten Randseiten (10, 18) angeordnet sind, wobei eine der beiden Federn (19) feststehend und die andere Feder (6) beweglich ist, wobei das zuerst zu verlegende erste Paneel (1) das anschließend zu verlegende, zweite Paneel (2) zur Horizontalverriegelung untergreift und wobei zur Vertikalverriegelung an dem ersten Paneel (1) eine Verriegelungskante (8) und an dem zweiten Paneel (2) die bewegliche Feder (6) in einer Haltenut (7) angeordnet ist, die hinter die Verriegelungskante (8) verlagerbar ist, und wobei jede der beiden Federn (8, 19) in jede der Nuten (16) zur Vertikalverrieglung eines solchen Paneels (1, 2) passt, wobei die Haltenut (7) schräg zur Oberseite (4) des Paneels (2) verläuft, so dass die bewegliche Feder (6) beim Verbinden nach schräg oben und nach schräg unten verlagerbar ist, wobei an dem Paneel (1), welches das benachbarte Paneel (2) zur Horizontalverriegelung mit einer Rastzunge (11) untergreift, ein Auflagersockel (9) im vertikalen Abstand zur Rastzunge (11) angeordnet ist, wobei die bewegliche Feder (6) beim vertikalen Ablegen von dem Auflagersockel (9) des benachbarten Paneels (1) elastisch verformbar ist.

2. Belag nach Anspruch 1, **dadurch gekennzeichnet, dass** die beweglichen Federn (6) von vier im Quadrat angeordneten Paneelen (1, 2) in vier unterschiedliche Richtungen weisen, wobei die beweglichen Federn (6) von sich diagonal gegenüberliegenden Paneelen (1, 2) in entgegengesetzte Richtungen weisen.

3. Belag nach Anspruch 1 oder 2, **dadurch gekennzeichnet, dass** Paneele (1, 2) an Randseiten (5), an denen die Feder (6) beweglich ist, durch horizontales Ineinanderstecken, durch vertikales Ablegen oder durch Einschwenken miteinander verbindbar sind.

4. Belag nach einem der Ansprüche 1 bis 3, **dadurch gekennzeichnet, dass** die bewegliche Feder (6) zum Verbinden mit einem benachbarten Paneel (1) durch elastische Verformung während eines Kontaktes mit dem benachbarten Paneel (1) in eine Freigabeposition verlagerbar ist, um bei Erreichen der Verriegelungsposition aus der Haltenut (7) auszufahren, um zur Vertikalverriegelung die Verriegelungskante (8) am anderen Paneel (1) zu hintergreifen.

5. Belag nach einem der Ansprüche 1 bis 4, **dadurch gekennzeichnet, dass** ein längsseitig aus der Haltenut (7) vorstehender Verriegelungsteil (21) der beweglichen Feder (6) an seiner Unterseite eine gegenüber der Verlegeebene (V) geneigte Gleitfläche (28) besitzt.

6. Belag nach einem der Ansprüche 1 bis 5, **dadurch gekennzeichnet, dass** die bewegliche Feder (6) in der Haltenut (7) verliersicher form-, stoff- und/oder kraftschlüssig gehalten ist.

7. Belag nach einem der Ansprüche 1 bis 6, **dadurch gekennzeichnet, dass** die bewegliche Feder (6) wenigstens einen Haltenocken (22) aufweist, der in der Verriegelungsstellung außerhalb der Haltenut (7) angeordnet ist und die bewegliche Feder (6) in der Verriegelungsstellung hält und/oder die bewegliche Feder (6) in der Freigabestellung formschlüssig oder kraftschlüssig in der Haltenut (7) hält

8. Belag nach einem der Ansprüche 1 bis 7, **dadurch gekennzeichnet, dass** wenigstens ein Haltenocken (22) an einer Zunge (25) der beweglichen Feder (6) angeordnet ist, wobei die Zunge (25) dafür vorgesehen ist, beim vertikalen Ablegen oder Abschwenken des Paneels (2) mit dem Auflagersockel (9) des anderen Paneels (1) in Kontakt zu kommen.

9. Belag nach einem der Ansprüche 1 bis 8, **dadurch gekennzeichnet, dass** eine randseitige Stoßfuge (SF) zwischen benachbarten Paneelen (1, 2) im Übergang zur Oberseite (4) der Paneele (1, 2) eine Fase (30) oder einen Stufenfalz aufweist.

## Claims

1. Covering of rectangular or square panels (1, 2) laid to form an assembly, wherein the panels (1, 2) are arranged in the form of a chessboard such that butt joints (SF) between the panels (1, 2) cross, wherein each panel (1, 2) has at its border sides (5, 10, 17, 18) grooves (16) and tongues (19) for the horizontal locking and vertical locking with adjacent panels (1, 2) and wherein the tongues (6, 19) are arranged for the vertical locking onto two adjacent border sides (5, 17) and the grooves (16) are arranged for the vertical locking on the two other adjacent border sides (10, 18), wherein one of the two tongues (19) is fixed and the other tongue (6) is movable, wherein the first panel (1) to be laid first engages below the second panel (2) to be laid subsequently for the horizontal locking and wherein for the vertical locking on the first panel (1) a locking edge (8) and on the second panel (2) the movable tongue (6) is arranged in a holding groove (7), which can be displaced behind the locking edge (8), and wherein each of the two tongues (8, 19) fits in each of the grooves (16) for the vertical locking of a panel (1, 2) of this sort, wherein the holding groove (7) extends obliquely to the upper side (4) of the panel (2), such that the movable tongue (6) can be displaced obliquely upwards and obliquely downwards when connecting, wherein on the panel (1), which engages below the adjacent panel (2) for horizontal locking with a latching tongue (11), is disposed a support pedestal (9) in vertical spacing to the latching tongue (11), wherein the movable tongue (6) at vertical deposition is elastically deformable by the support pedestal (9) of the adjacent panel (1).

2. Covering according to claim 1, **characterised in that** the movable tongues (6) of four panels (1, 2), arranged in a square, point in four different directions, wherein the movable tongues (6) point in opposing directions from panels (1, 2) diagonally opposite them.

3. Covering according to claim 1 or 2, **characterised in that** panels (1, 2) are connectable with one another at border sides (5) at which the tongue (6) is movable, by means of horizontal slotting in one another, by vertical depositing or by pivoting.

4. Covering according to any of claims 1 to 3, **characterised in that** the movable tongue (6) for connecting with an adjacent panel (1) is displaceable into a release position by means of elastic deformation during a contact with the adjacent panel (1), in order when reaching the locking position to extend out of the holding groove (7), in order, for vertical locking, to engage behind the locking edge (8) on the other panel (1).

5. Covering according to any of claims 1 to 4, **characterised in that** a locking part (21), protruding on its longitudinal side out of the holding groove (7), of the movable tongue (6) has on its bottom side a sliding surface (28) tilted with respect to the laying plane (V).

6. Covering according to any of claims 1 to 5, **characterised in that** the movable tongue (6) is held captively in a form-fitting, material-fitting and/or force-fitting manner in the holding groove (7).

7. Covering according to any of claims 1 to 6, **characterised in that** the movable tongue (6) has at least one holding cam (22), which is disposed in the locking position externally to the holding groove (7) and holds the movable tongue (6) in the locking position and/or holds the movable tongue (6) in the release position in form-fitting or force-fitting manner in the holding groove (7)

8. Covering according to any of claims 1 to 7, **characterised in that** at least one holding cam (22) is disposed on a lug (25) of the movable tongue (6), wherein the lug (25) is provided for coming into contact with the support pedestal (9) of the other panel (1) when the panel (2) is vertically deposited or pivoted.

9. Covering according to any of claims 1 to 8, **characterised in that** an edge-side butt joint (SF) between adjacent panels (1, 2) in the transition to the upper side (4) of the panels (1, 2) has a bevel (30) or a stepped rabbet.

## Revendications

1. Garniture de panneaux (1, 2) rectangulaires ou carrés joints les uns aux autres, dans laquelle les panneaux (1, 2) sont agencés en damier, de sorte que des joints (SF) entre les panneaux (1, 2) se croisent, dans laquelle chaque panneau (1, 2) possède au niveau de ses côtés marginaux (5, 10, 17, 18) des rainures (16) et des languettes (19) pour le verrouillage horizontal et le verrouillage vertical avec des panneaux adjacents (1, 2) et dans laquelle les languettes (6, 19) sont agencées pour le verrouillage vertical au niveau de deux côtés marginaux adjacents (5, 17) et les rainures (16) sont agencées pour le verrouillage vertical au niveau des deux autres côtés marginaux adjacents (10, 18), dans laquelle une des deux languettes (19) est fixe et l'autre languette (6) est mobile, dans laquelle le premier panneau (1) à poser en premier vient en prise en dessous du deuxième panneau (2) à poser ensuite pour le verrouillage horizontal et dans laquelle pour le verrouillage vertical, une arête de verrouillage (8) est agencée au niveau du premier panneau (1) et la languette mobile (6) est agencée dans une rainure de retenue (7) au niveau du deuxième panneau (2), qui est déplaçable derrière l'arête de verrouillage (8), et dans laquelle chacune des deux languettes (8, 19) est adaptée dans chacune des rainures (16) pour le verrouillage vertical d'un tel panneau (1, 2), dans laquelle la rainure de retenue (7) s'étend obliquement par rapport au côté supérieur (4) du panneau (2), de sorte que la languette mobile (6) est déplaçable lors du raccordement obliquement vers le haut et obliquement vers le bas, dans laquelle un socle support (9) est agencé à distance verticale de la languette d'encliquetage (11) au niveau du panneau (1), qui vient en prise en dessous du panneau adjacent (2) pour le verrouillage horizontal avec une languette d'encliquetage (11), dans laquelle la languette mobile (6) est élastiquement déformable lors du dépôt vertical du socle support (9) du panneau adjacent (1).

2. Garniture selon la revendication 1, **caractérisée en ce que** les languettes mobiles (6) de quatre panneaux (1, 2) agencés en carré sont dirigées dans quatre directions différentes, dans laquelle les languettes mobiles (6) de panneaux (1, 2) diagonalement opposés sont dirigées dans des directions opposées.

3. Garniture selon la revendication 1 ou 2, **caractérisée en ce que** les panneaux (1, 2) au niveau des côtés marginaux (5), au niveau desquels la languette (6) est mobile, peuvent être raccordés les uns aux autres par emboîtement horizontal, par dépôt vertical ou par pivotement rentrant.

4. Garniture selon l'une quelconque des revendications 1 à 3, **caractérisée en ce que** la languette mobile (6) est déplaçable pour le raccordement à un panneau adjacent (1) par déformation élastique pendant un contact avec le panneau adjacent (1) dans une position de libération pour se déployer de la rainure de retenue (7) lors de l'atteinte de la position de verrouillage pour venir en prise derrière l'arête de verrouillage (8) au niveau de l'autre panneau (1) pour le verrouillage vertical.

5. Garniture selon l'une quelconque des revendications 1 à 4, **caractérisée en ce qu'**un élément de verrouillage (21), faisant saillie de la rainure de retenue (7) côté longitudinal, de la languette mobile (6) possède au niveau de son côté intérieur une surface de glissement (28) inclinée par rapport au plan de pose (V).

6. Garniture selon l'une quelconque des revendications 1 à 5, **caractérisée en ce que** la languette mobile (6) est retenue imperdable par complémentarité de forme, de matière et/ou par force dans la rainure de retenue (7).

7. Garniture selon l'une quelconque des revendications 1 à 6, **caractérisée en ce que** la languette mobile (6) présente au moins une came de retenue (22), qui est agencée dans la position de verrouillage à l'extérieur de la rainure de retenue (7) et retient la languette mobile (6) dans la position de verrouillage et/ou retient la languette mobile (6) dans la position de libération par complémentarité de forme ou par force dans la rainure de retenue (7)

8. Garniture selon l'une quelconque des revendications 1 à 7, **caractérisée en ce qu'**au moins une came de retenue (22) est agencée au niveau d'une langue (25) de la languette mobile (6), dans laquelle la langue (25) est prévue pour venir en contact lors de la pose verticale ou du pivotement sortant du panneau (2) avec le socle support (9) de l'autre panneau (1).

9. Garniture selon l'une quelconque des revendications 1 à 8, **caractérisée en ce qu'**un joint côté marginal (SF) entre des panneaux adjacents (1, 2) présente dans la transition au côté supérieur (4) des panneaux (1, 2) un chanfrein (30) ou une feuillure étagée.
